# EUROPÄISCHE PATENTANMELDUNG

(11) **EP 3 267 052 A1**
(43) Veröffentlichungstag der Anmeldung: **10.01.2018**
(21) Anmeldenummer: 16178665.2
(22) Anmeldetag: 08.07.2016
(51) Int. Cl.: F16B 25/00

(54) **SCHRAUBE UND HERSTELLUNGSVERFAHREN**

(71) Anmelder: HILTI Aktiengesellschaft, 9494 Schaan (LI)
(72) Erfinder: Grad, Patrick, 9453 Eichberg (CH); Kistler, Thomas, 9016 St. Gallen (CH)
(74) Vertreter: Hilti Aktiengesellschaft Corporate Intellectual Property

(57) **Zusammenfassung**

Schraube (10), umfassend einen Schaft, welcher einen ersten Schaftabschnitt (12), einen zweiten Schaftabschnitt (14) und eine den ersten Schaftabschnitt (12) mit dem zweiten Schaftabschnitt (14) verbindende Schweissnaht (50) aufweist, wobei der erste Schaftabschnitt (12) aus einem ersten Stahl mit einer ersten Kohlenstoffkonzentration und einer ersten Materialhärte und der zweite Schaftabschnitt (14) aus einem zweiten Stahl mit einer zweiten Kohlenstoffkonzentration und einer zweiten Materialhärte besteht, wobei die zweite Kohlenstoffkonzentration höher als die erste Kohlenstoffkonzentration ist, und wobei die Schweissnaht (50) eine grössere Materialhärte aufweist als der erste Schaftabschnitt (12), dadurch gekennzeichnet, dass die Materialhärte der Schweissnaht (50) von einem innenliegenden Kern (52) der Schweissnaht (50) zu einer Oberfläche (54) der Schweissnaht (50) abnimmt.

## Beschreibung

Die vorliegende Erfindung betrifft eine Schraube sowie ein Verfahren zur Herstellung einer Schraube.

Je nach Anwendungsgebiet sind die Anforderungen an eine Schraube vielfältig. Soll die Schraube in einer korrosiven Umgebung eingesetzt werden, wird als Material häufig kohlenstoffarmer, rostfreier Stahl verwendet. Soll die Schraube eine hohe Materialhärte besitzen, insbesondere im Bereich ihres Gewindes oder ihrer Spitze, die unter Umständen als Bohrspitze ausgebildet ist, wird als Material häufig kohlenstoffreicher Stahl verwendet, welcher beispielsweise mittels Erhitzung gehärtet wird. Um sowohl eine Korrosionsfestigkeit in einem Teilbereich der Schraube als auch eine hohe Materialhärte in einem anderen Teilbereich der Schraube zu erreichen, ist es bekannt, einen ersten Schaftabschnitt und einen zweiten Schaftabschnitt unter Bildung einer Schweissnaht miteinander zu verschweissen. Die beiden Schaftabschnitte bestehen dabei aus Stahl mit unterschiedlicher Kohlenstoffkonzentration. Zum Einsatz kommen bekannte Schweissverfahren, wie beispielsweise Widerstandsschweissen, Pressschweissen oder Strahlschweissen. Aufgrund der Vermischung beider Fügepartner in der Schmelze während des Schweissvorgangs entsteht dabei eine Schweissnaht mit hoher Materialhärte.

Später wird auf einer Oberfläche des so entstandenen Schaftes ein Gewinde erzeugt, üblicherweise mit Hilfe von Walz- oder anderen Formwerkzeugen. Ausserdem wird der kohlenstoffreiche Schaftabschnitt gehärtet, üblicherweise durch Erwärmung. Um einen Verschleiss der Formwerkzeuge gering zu halten, geschieht das Härten üblicherweise nach dem Formen des Gewindes. Ausserdem ist es bekannt, die Schraube vor dem Formen des Gewindes thermisch anzulassen, um die Härte der Schweissnaht sowie eines von der Schweisswärme beeinflussten und somit unter Umständen ebenfalls gehärteten, an die Schweissnaht unmittelbar anschliessenden Bereichs des Schaftes, soweit möglich, zu reduzieren.

Der Erfindung liegt die Aufgabe zu Grunde, eine verbesserte Schraube sowie ein verbessertes Verfahren zur Herstellung einer Schraube zur Verfügung zu stellen.

Diese Aufgabe ist bei einer Schraube mit einem Schaft, welcher einen ersten Schaftabschnitt, einen zweiten Schaftabschnitt und eine den ersten Schaftabschnitt mit dem zweiten Schaftabschnitt verbindende Schweissnaht aufweist, wobei der erste Schaftabschnitt aus einem ersten Stahl mit einer ersten Kohlenstoffkonzentration und einer ersten Materialhärte und der zweite Schaftabschnitt aus einem zweiten Stahl mit einer zweiten Kohlenstoffkonzentration und einer zweiten Materialhärte besteht, wobei die zweite Kohlenstoffkonzentration höher als die erste Kohlenstoffkonzentration ist, und wobei die Schweissnaht eine grössere Materialhärte aufweist als der erste Schaftabschnitt, dadurch gelöst, dass die Materialhärte der Schweissnaht von einem innenliegenden Kern der Schweissnaht zu einer Oberfläche der Schweissnaht abnimmt. Hierdurch unterliegen Walz- oder andere Formwerkzeuge, welche das Material des Schaftes nur an dessen Oberfläche verformen, einem nur geringen Verschleiss.

Unter einer Materialhärte im Sinne der Erfindung ist die Vickershärte (HV) bei einer Prüfkraft von 0,3 kp zu verstehen (angegeben als HV 0.3).

Eine vorteilhafte Ausführungsform ist dadurch gekennzeichnet, dass die Materialhärte der Schweissnaht von dem innenliegenden Kern der Schweissnaht bis zu der Oberfläche der Schweissnaht stetig abnimmt. Eine alternative Ausführungsform ist dadurch gekennzeichnet, dass die Materialhärte der Schweissnaht von dem innenliegenden Kern der Schweissnaht zu der Oberfläche der Schweissnaht abrupt abnimmt.

Eine vorteilhafte Ausführungsform ist dadurch gekennzeichnet, dass der Schaft einen ellipsenförmigen Querschnitt aufweist. Bevorzugt weist der Schaft einen kreisförmigen Querschnitt auf.

Eine vorteilhafte Ausführungsform ist dadurch gekennzeichnet, dass der Schaft an der Schweissnaht ein Gewinde trägt. Bevorzugt ist das Gewinde ein selbstschneidendes oder selbstfurchendes Gewinde. Bevorzugt erstreckt sich das Gewinde bis auf den ersten Schaftabschnitt und/oder den zweiten Schaftabschnitt.

Eine vorteilhafte Ausführungsform ist dadurch gekennzeichnet, dass der erste Schaftabschnitt einen Schraubenantrieb und/oder einen Schraubenkopf umfasst. Eine weitere vorteilhafte Ausführungsform ist dadurch gekennzeichnet, dass der zweite Schaftabschnitt eine Schraubenspitze, insbesondere eine Bohrspitze, umfasst.

Die Aufgabe ist bei einem Verfahren zur Herstellung einer Schraube, bei dem ein erster Schaftabschnitt und ein zweiter Schaftabschnitt unter Bildung einer Schweissnaht miteinander verschweisst werden, wobei der erste Schaftabschnitt aus einem ersten Stahl mit einer ersten Kohlenstoffkonzentration und der zweite Schaftabschnitt aus einem zweiten Stahl mit einer zweiten Kohlenstoffkonzentration besteht, wobei die zweite Kohlenstoffkonzentration höher als die erste Kohlenstoffkonzentration ist, dadurch gelöst, dass die Schweissnaht mit einer Kohlenstoffkonzentration versehen wird, welche von einem innenliegenden Kern der Schweissnaht zu einer Oberfläche der Schweissnaht abnimmt. Aufgrund der reduzierten Kohlenstoffkonzentration an der Oberfläche der Schweissnaht ist gewährleistet, dass während des Schweissprozesses die Materialhärte der Schweissnaht an der Oberfläche gering bleibt, so dass Walz- oder andere Formwerkzeuge, welche das Material des Schaftes nur an dessen Oberfläche verformen, einem nur geringen Verschleiss unterliegen.

Eine vorteilhafte Ausführungsform des Verfahrens ist dadurch gekennzeichnet, dass die Kohlenstoffkonzentration der Schweissnaht von dem innenliegenden Kern der Schweissnaht bis zu der Oberfläche der Schweissnaht stetig abnimmt. Eine alternative Ausführungsform ist dadurch gekennzeichnet, dass die Kohlenstoffkonzentration der Schweissnaht von dem innenliegenden Kern der Schweissnaht zu der Oberfläche der Schweissnaht abrupt abnimmt.

Eine vorteilhafte Ausführungsform ist dadurch gekennzeichnet, dass die Schweissnaht angelassen wird.

Eine vorteilhafte Ausführungsform ist dadurch gekennzeichnet, dass der zweite Schaftabschnitt gehärtet wird.

Eine vorteilhafte Ausführungsform ist dadurch gekennzeichnet, dass an der Schweissnaht ein insbesondere selbstschneidendes oder selbstfurchendes Gewinde erzeugt wird. Bevorzugt erstreckt sich das Gewinde bis auf den ersten Schaftabschnitt und/oder den zweiten Schaftabschnitt.

Eine vorteilhafte Ausführungsform ist dadurch gekennzeichnet, dass der erste Schaftabschnitt mit einem Schraubenantrieb und/oder einem Schraubenkopf versehen wird. Eine weitere vorteilhafte Ausführungsform ist dadurch gekennzeichnet, dass der zweite Schaftabschnitt mit einer Spitze, insbesondere einer Bohrspitze, versehen wird.

Die Erfindung wird im Folgenden unter Bezugnahme auf die Zeichnungen näher erläutert. Es zeigen:
- Fig. 1: eine Schraube mit einer Schweissnaht und
- Fig. 2: einen Materialhärteverlauf entlang dem Querschnitt der Schweissnaht der Schraube aus Fig. 1.

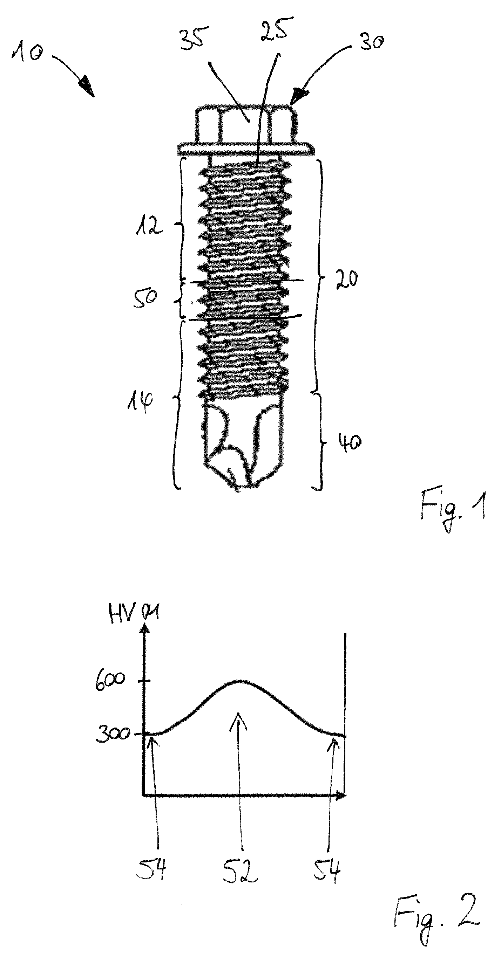

In Fig. 1 ist eine Schraube 10 mit einem Schaft 20, einem Schraubenkopf 30 und einer Schraubenspitze 40 dargestellt. Die Schraubenspitze 40 ist als Bohrspitze ausgebildet, so dass die Schraube 10 eine Selbstbohrschraube ist. Bei nicht gezeigten Ausführungsbeispielen ist die Schraubenspitze als gewalzte und/oder formende Gewindespitze ausgebildet oder die Schraube weist ein stumpfes oder flaches Ende auf. Der Schraubenkopf 30 umfasst einen Schraubenantrieb 35, welcher als Aussensechskant ausgebildet ist. Bei nicht dargestellten Ausführungsbeispielen ist der Schraubenantrieb als Schlitz, Kreuzschlitz, Innen- oder Aussenmehrkant, Innen- oder Aussenmehrrund, Innen- oder Aussenvielzahn oder dergleichen ausgebildet. Der Schaft 20 hat einen kreisförmigen Querschnitt und trägt ein Gewinde 25, welches als selbstfurchendes Gewinde ausgebildet ist. Bei nicht dargestellten Ausführungsbeispielen ist das Gewinde als selbstschneidendes Gewinde oder aber als ISO-Gewinde oder dergleichen ausgebildet.

Zur Herstellung der Schraube 10 werden ein erster Schaftabschnitt 12 und ein zweiter Schaftabschnitt 14 miteinander verschweisst, wobei sich eine Schweissnaht 50 bildet. Der erste Schaftabschnitt 12 besteht aus einem ersten Stahl mit einer ersten Kohlenstoffkonzentration, bevorzugt aus einem rostfreien Stahl mit einer relativ geringen Kohlenstoffkonzentration. Der zweite Schaftabschnitt 14 besteht aus einem zweiten Stahl mit einer zweiten Kohlenstoffkonzentration, bevorzugt aus einem härtbaren Stahl mit einer relativ hohen Kohlenstoffkonzentration, so dass die zweite Kohlenstoffkonzentration höher als die erste Kohlenstoffkonzentration ist.

Während des Schweissvorgangs werden der erste Schaftabschnitt 12 und der zweite Schaftabschnitt 14 an ihren aufeinander zu weisenden Stirnseiten so heiss, dass das Material flüssig wird. Das verflüssigte Material des ersten Schaftabschnitts 12 vermischt sich mit dem verflüssigten Material des zweiten Schaftabschnitts 14. Beim darauffolgenden Abkühlen wird das vermischte Material fest und bildet die Schweissnaht 50. Durch die Vermischung und/oder durch Diffusion von Kohlenstoff von dem zweiten Schaftabschnitt 14 in die Schweissnaht 50 ist die Kohlenstoffkonzentration innerhalb der Schweissnaht gegenüber dem ersten Schaftabschnitt 12 erhöht.

Die Schweissnaht wird dabei mit einer Kohlenstoffkonzentration versehen, welche von einem innenliegenden Kern der Schweissnaht 50 zu einer Oberfläche der Schweissnaht 50 abnimmt. Bevorzugt ist die Kohlenstoffkonzentration an der Oberfläche nicht wesentlich höher als in dem ersten Schaftabschnitt. Während des Schweissprozesses bleibt die Materialhärte der Schweissnaht an der Oberfläche gering, so dass Walz- oder andere Formwerkzeuge, welche das Material des Schaftes 20 nur an dessen Oberfläche verformen, einem nur geringen Verschleiss unterliegen. Ein thermisches Anlassen der Schweissnaht zur Reduktion der Materialhärte ist unter Umständen nicht erforderlich. Gemäss einigen Ausführungsbeispielen wird die Schraube dennoch thermisch angelassen, insbesondere nach dem Schweissvorgang und vor dem Erzeugen eines Gewindes.

Das Gefälle der Kohlenstoffkonzentration von dem innenliegenden Kern der Schweissnaht 50 zu der Oberfläche der Schweissnaht 50 wird vorzugsweise dadurch erreicht, dass der zweite Schaftabschnitt 14 bereits vor dem Schweissvorgang im Bereich seines innenliegenden Kernes mehr Kohlenstoff aufweist als im Bereich seiner Oberfläche. Bei vorteilhaften Ausführungsbeispielen wird vor oder während des Schweissvorgangs an der auf den ersten Schaftabschnitt 12 zu weisenden Stirnseite des zweiten Schaftabschnitts 14 ein Ring aus einem kohlenstoffarmen Stahl, dessen Kohlenstoffkonzentration insbesondere nicht wesentlich höher ist als die des ersten Schaftabschnitts 12, aufgebracht. Im Zentrum des Rings befindet sich dabei bevorzugt ein Ringkern aus einem kohlenstoffreichen Stahl, dessen Kohlenstoffkonzentration insbesondere etwa so hoch ist wie die des zweiten Schaftabschnitts 14.

In Fig. 2 ist der Verlauf der Materialhärte der Schraube 10 entlang dem Querschnitt der Schweissnaht 50, also von einem innenliegenden Kern 52 der Schweissnaht 50 bis zu einer Oberfläche 54 der Schweissnaht 50, dargestellt. Aufgrund der Erhitzung und der anschliessenden schnellen Abkühlung, insbesondere während des Schweissvorgangs, wird der Stahl der Schweissnaht 50 gehärtet, wobei die resultierende Materialhärte umso grösser ist, je höher die Kohlenstoffkonzentration ist. Dies führt dazu, dass die Materialhärte der Schweissnaht 50, wie in Fig. 2 zu sehen, ebenfalls von dem innenliegenden Kern 52 der Schweissnaht 50 zu der Oberfläche 54 der Schweissnaht 50 abnimmt. In dem Innenliegenden Kern 52 beträgt die Materialhärte der Schweissnaht 50 bevorzugt mindestens 500 HV 0.3 und besonders bevorzugt höchstens 750 HV 0.3. An der Oberfläche 54 beträgt die Materialhärte der Schweissnaht 50 bevorzugt höchstens 350 HV 0.3 und besonders bevorzugt höchstens 250 HV 0.3.

Bei dem vorliegenden Ausführungsbeispiel nehmen die Kohlenstoffkonzentration und damit auch die Materialhärte der Schweissnaht 50 von dem innenliegenden Kern 52 der Schweissnaht 50 bis zu der Oberfläche 54 der Schweissnaht 50 stetig ab. Bei nicht dargestellten Ausführungsbeispielen nehmen die Kohlenstoffkonzentration und damit die Materialhärte der Schweissnaht von dem innenliegenden Kern der Schweissnaht zu der Oberfläche der Schweissnaht an einer oder mehreren Stellen entlang des Querschnitts der Schweissnaht abrupt ab.

Nach dem Schweissvorgang wird das Gewinde 25 in die Oberfläche der Schweissnaht 50 und bevorzugt des ersten Schaftabschnitts 12 und des zweiten Schaftabschnitts 14 eingeformt, insbesondere gewalzt. Aufgrund der geringen Materialhärte der Oberfläche auch der Schweissnaht 50 unterliegt das Form- beziehungsweise Walzwerkzeug nur einem geringen Verschleiss.

Nachdem das Gewinde 25 erzeugt ist, wird der zweite Schaftabschnitt 14 ganz oder teilweise gehärtet, vorzugsweise thermisch gehärtet. Dadurch werden die Schraubenspitze 40 und/oder gegebenenfalls das Gewinde 25 mit einer für das Bohren eines Loches beziehungsweise das Formen eines Gegengewindes ausreichenden Materialhärte versehen.

## Patentansprüche

1. Schraube, umfassend einen Schaft, welcher einen ersten Schaftabschnitt, einen zweiten Schaftabschnitt und eine den ersten Schaftabschnitt mit dem zweiten Schaftabschnitt verbindende Schweissnaht aufweist, wobei der erste Schaftabschnitt aus einem ersten Stahl mit einer ersten Kohlenstoffkonzentration und einer ersten Materialhärte und der zweite Schaftabschnitt aus einem zweiten Stahl mit einer zweiten Kohlenstoffkonzentration und einer zweiten Materialhärte besteht, wobei die zweite Kohlenstoffkonzentration höher als die erste Kohlenstoffkonzentration ist, und wobei die Schweissnaht eine grössere Materialhärte aufweist als der erste Schaftabschnitt, **dadurch gekennzeichnet, dass** die Materialhärte der Schweissnaht von einem innenliegenden Kern der Schweissnaht zu einer Oberfläche der Schweissnaht abnimmt.

2. Schraube nach Anspruch 1, wobei die Materialhärte der Schweissnaht von dem innenliegenden Kern der Schweissnaht bis zu der Oberfläche der Schweissnaht stetig abnimmt.

3. Schraube nach Anspruch 1, wobei die Materialhärte der Schweissnaht von dem innenliegenden Kern der Schweissnaht zu der Oberfläche der Schweissnaht abrupt abnimmt.

4. Schraube nach einem der vorhergehenden Ansprüche, wobei der Schaft einen ellipsenförmigen, insbesondere kreisförmigen Querschnitt aufweist.

5. Schraube nach einem der vorhergehenden Ansprüche, wobei der Schaft an der Schweissnaht ein insbesondere selbstschneidendes oder selbstfurchendes Gewinde trägt.

6. Schraube nach Anspruch 5, wobei sich das Gewinde bis auf den ersten Schaftabschnitt und/oder den zweiten Schaftabschnitt erstreckt.

7. Schraube nach einem der vorhergehenden Ansprüche, wobei der erste Schaftabschnitt einen Schraubenantrieb und/oder einen Schraubenkopf umfasst.

8. Schraube nach einem der vorhergehenden Ansprüche, wobei der zweite Schaftabschnitt eine Schraubenspitze, insbesondere eine Bohrspitze, umfasst.

9. Verfahren zur Herstellung einer Schraube, bei dem ein erster Schaftabschnitt und ein zweiter Schaftabschnitt unter Bildung einer Schweissnaht miteinander verschweisst werden, wobei der erste Schaftabschnitt aus einem ersten Stahl mit einer ersten Kohlenstoffkonzentration und der zweite Schaftabschnitt aus einem zweiten Stahl mit einer zweiten Kohlenstoffkonzentration besteht, wobei die zweite Kohlenstoffkonzentration höher als die erste Kohlenstoffkonzentration ist, **dadurch gekennzeichnet, dass** die Schweissnaht mit einer Kohlenstoffkonzentration versehen wird, welche von einem innenliegenden Kern der Schweissnaht zu einer Oberfläche der Schweissnaht abnimmt.

10. Verfahren nach Anspruch 9, wobei die Kohlenstoffkonzentration der Schweissnaht von dem innenliegenden Kern der Schweissnaht bis zu der Oberfläche der Schweissnaht stetig abnimmt.

11. Verfahren nach Anspruch 9, wobei die Kohlenstoffkonzentration der Schweissnaht von dem innenliegenden Kern der Schweissnaht zu der Oberfläche der Schweissnaht abrupt abnimmt.

12. Verfahren nach einem der Ansprüche 9 bis 11, wobei die Schweissnaht angelassen wird.

13. Verfahren nach einem der Ansprüche 9 bis 12, wobei der zweite Schaftabschnitt gehärtet wird.

14. Verfahren nach einem der Ansprüche 9 bis 13, wobei an der Schweissnaht ein insbesondere selbstschneidendes oder selbstfurchendes Gewinde erzeugt wird.

15. Verfahren nach Anspruch 14, wobei sich das Gewinde bis auf den ersten Schaftabschnitt und/oder den zweiten Schaftabschnitt erstreckt.
